**Europäisches Patentamt**

**European Patent Office**

**Office européen des brevets**

(19)

(11) Publication number : **0 542 709 A1**

## (12) EUROPEAN PATENT APPLICATION

(21) Application number : **92870187.9**

(22) Date of filing : **12.11.92**

(51) Int. Cl.⁵ : **B29C 67/14**

(30) Priority : **13.11.91 US 788265**

(43) Date of publication of application :
**19.05.93 Bulletin 93/20**

(84) Designated Contracting States :
**AT BE CH DE DK ES FR GB GR IE IT LI LU MC NL PT SE**

(71) Applicant : **MONSANTO COMPANY**
**800 North Lindbergh Boulevard**
**St. Louis Missouri 63167 (US)**

(72) Inventor : **Dave, Raju Shivprasad**
**10 B Paris Avenue**
**Worcester, Massachusetts 01603 (US)**
Inventor : **Fingerson, Conrad Ferdinand**
**604 Winona Street**
**Charfield, Minnesota 55923 (US)**

(74) Representative : **Ernst, Hubert et al**
**Monsanto Services International S.A., Patent Department, Avenue de Tervuren 270-272, Letter Box No. 21**
**B-1150 Brussels (BE)**

(54) **Method and apparatus for making composite materials.**

(57)   A method and apparatus for making composite materials (20) impregnates fibers (102) with resin (104). The resin (104) is injected under pressure through injectors (24) and/or (34) in an impregnation chamber (38). The chamber (38) has a tapering portion so that a pressure head is built up along the chamber. The coating may then be injected in a die (48) which may have a pre-die (37) and final die (39). Coating (106) is then injected onto the fibers and resin (102) and (104) and the, composite cures prior to leaving the dye (48).

FIG. 1

EP 0 542 709 A1

## BACKGROUND OF THE INVENTION

### 1. Field of the Invention

The present invention relates to an apparatus and method for forming fiber reinforced resin composite materials.

### 2. Description of the Prior Art

Prior art pultrusion processes typically involved passing continuous filaments or fibers, such as glass or carbon fibers, through an open bath containing a liquid or molten resin for applying a coating to the fibers. The resin-impregnated fibers are then pulled through a heated die wherein they are formed and cured to bond the fibers. After passing through a puller, the resulting part profile is cut into usable segments. The pultrusion processes using an open bath suffer from several shortcomings including poor resin setup and cure, resulting in voids and poor surface quality. Open baths also limit run speeds and the types of resins which may be used. In addition, the open bath has safety problems from noxious fumes and disposal of large amounts of unused resin.

The prior art processes using reaction injection molding (RIM) pultrusion as described in U.S. Patent 4,635,432 and EPO 0 384 063 offer certain improvements over the bath and coating tank processes for some systems. However, they too have shortcomings which are overcome by the apparatus and processes of the present invention.

In addition to impregnating fibers with resin, it is often desirable to provide a coating around the pultruded composite while it is still in the pultrusion die. Without an adequate coating, the exterior resin may degrade due to environmental processes of erosion, sun and wind, or from chemical attack. This leaves the fibers exposed so that the fibers may be weakened or cut, thereby eventually weakening the entire composite. In addition, part surface finish or appearance degrades and parts become uncomfortable to handle due to the irritating nature of small exposed fibers.

A method of coating prior to passing through a die is shown in U.S. Patent 4,394,338 to Fuwa. However, the Fuwa patent still requires an open resin bath for impregnating the filaments with all the problems and limitations associated with open baths. Since precise metering of the ratio of applied coating to the underlying resin is lacking in the Fuwa patent using an open bath, there are likely to be streaks and variations in the coating thickness along the surface of such a pultruded composite.

It can be seen that a process for forming fiber reinforced resin composite materials is needed which applies the coating within the die as part of the forming process and which can use different types of coatings which will not stick to a die. A pultrusion process is also needed which controls the configuration of the fibers so that products having varied cross sections can be achieved and which also provides an adequate coating for greater quality of the composite materials. The present invention addresses these as well as other problems associated with pultrusion technology.

## SUMMARY OF THE INVENTION

The present invention is directed to improved resin impregnation and coating of resins and reinforcing fibers for making a composite material. The process of the present invention used in pultrusion achieves a higher quality composite at less cost and at a higher production rate.

The pultruded composites prepared according to the present invention are formed of a polymeric resin component and a reinforcing component both of which are well known in the art. The polymeric resin component, hereinafter referred to as resin, may be a thermosetting resin or a thermoplastic resin. The resin component may be polymeric, prepolymeric, oligomeric or monomeric type materials which advance in degree of cure or conversion to form cured or higher molecular weight polymers, or a reactive injection molding (RIM) type multicomponent system wherein the separate components polymerize upon mixing in the pultrusion apparatus to form the polymeric resin component. The resin component or components which advance in degree of cure or conversion to form cured or high molecular weight polymers are hereinafter referred to as resin forming materials. Examples of thermosetting resins systems include phenolics, unsaturated polyesters, epoxies and the like. Examples of thermoplastic resins include polyolefins, polyesters, polyamides, polycaprolactones, polycarbonates, polyurethanes, polyureas and the like. The RIM pultrusion type resins are useful where faster line speeds are desired.

The reinforcing component may be in the form of filaments, fibers, strands, yarns, bundles, cords, woven mats, non-woven mats and the like hereinafter referred to individually and collectively as fibers. The fibers may be glass, carbon, boron, ceramic, metallic, polymeric and.the like. The fibers may be untreated or treated or sized with a material to improve bonding of the resin component or other properties of the pultruded composite.

In the pultruded composite, the resin component is sometimes referred to as resin matrix or matrix. The pultruded composite may be coated with one or more layers of a polymeric or polymer forming material, hereinafter referred to as coating, in the pultrusion apparatus as part of the pultrusion process. The coating may be the same composition as the resin or a different composition. When several layers of a coating are used, they may be the same or different. As is well known to those skilled in the art, the coating should have an affinity for and adhere to the resin and, when multilayers are used, to any adjacent layers of coating.

The choice of resin, fiber and coating may be varied widely and will depend on the particular end use application for the pultruded composite. Such choices are well known to those skilled in the art.

According to one aspect of the present invention, the fibers are heated prior to passing into a resin impregnation chamber. After heating, the fibers are compacted closer together prior to coating with resin-forming compound. The resin is injected onto the fibers under pressure. With the heated fibers, the resin impregnation occurs thoroughly and quickly. Injection of the resin also can be controlled by injecting the resin around the exterior of the fiber bundles or through the center of the bundle to enhance impregnation and/or to create a resin core. This method of injection also provides for using various types of resins which heretofore were impossible because of fast reaction times.

Following impregnation, the fiber resin bundle is forced through a slightly tapering passage. Compaction of the bundle creates a pressure head. The pressure head continues through the remainder of the impregnation and coating chambers and through the die or a two portion die having a predie section and final die section, or the apparatus may have two dies, so that a coating may be applied prior to or while passing the composite material completely through the die. Following the tapering chamber, die size may expand slightly to provide space for injecting a coating onto the fiber and resin bundle prior to exiting the die. With the expanded size, a thicker coating may be applied prior to exiting the die.

Upon passing through the remaining portion of the die, the coating does not adhere to the die wan as the pressure build-up from the compacting of the fiber and resin in the taper forces the coating along the die. Therefore, continuous cleaning or use of a lubricant in the die may not be required. This method of coating also provides for using various types of coatings which heretofore were impossible because of the lack of adhesion of the coating to the cured composite after passing through the die.

These and various other advantages and features of novelty which characterize the invention are pointed out with particularity in the claims annexed hereto and forming a part hereof. However, for a better understanding of the invention, its advantages, and the objects obtained by its use, reference should be made to the drawings which form a further part hereof, and to the accompanying descriptive matter, in which there is illustrated and described a preferred embodiment of the invention.

BRIEF DESCRIPTION OF THE DRAWINGS

In the drawings, wherein like letters and numerals indicate corresponding elements throughout the several views:

FIGURE 1 shows a perspective view of a resin impregnation and coating apparatus according to the principles of the present invention;

FIGURE 2 shows an end view of the fiber entrance to the resin impregnation and coating apparatus shown in Figure 1;

FIGURE 3 shows a side sectional view of the resin impregnation and coating apparatus taken along line 3-3 in Figure 2;

FIGURE 4 shows a side sectional view of a fiber compaction chamber of the resin impregnation and coating apparatus shown in Figure 1;

FIGURE 5 shows a side sectional view of the resin injectors and resin impregnation chamber of the pultrusion apparatus shown in Figure 1 and diagrammatic representation of the fibers and resin;

FIGURE 6 shows a side sectional view of the resin impregnation chamber shown in Figure 5 with resin being injected from a mandrel;

FIGURE 7 shows a side sectional view of the tapered impregnation chamber of the resin impregnation and coating apparatus shown in Figure 1 and a diagrammatic representation of a fiber and resin bundle;

FIGURE 8 shows a side sectional view of the coating chamber of the resin impregnation and coating apparatus shown in Figure 1 and a diagrammatic representation of the resin and fiber bundle and coating material;

FIGURE 9 shows an end sectional diagrammatic view of a coated composite with a resin core made according to the principles of the present invention;

FIGURE 10 shows a side sectional view of alternative embodiment of the injection chamber;

FIGURE 11 shows an enlarged sectional view of a mandrel shown in Figure 10 having lobes formed thereon;

FIGURE 12 shows a side sectional view of another alternative embodiment of the injection chamber; and,

FIGURE 13 shows a side sectional view of various flushing arrangements of the injection chamber.

DETAILED DESCRIPTION OF THE PREFERRED EMBODIMENT(S)

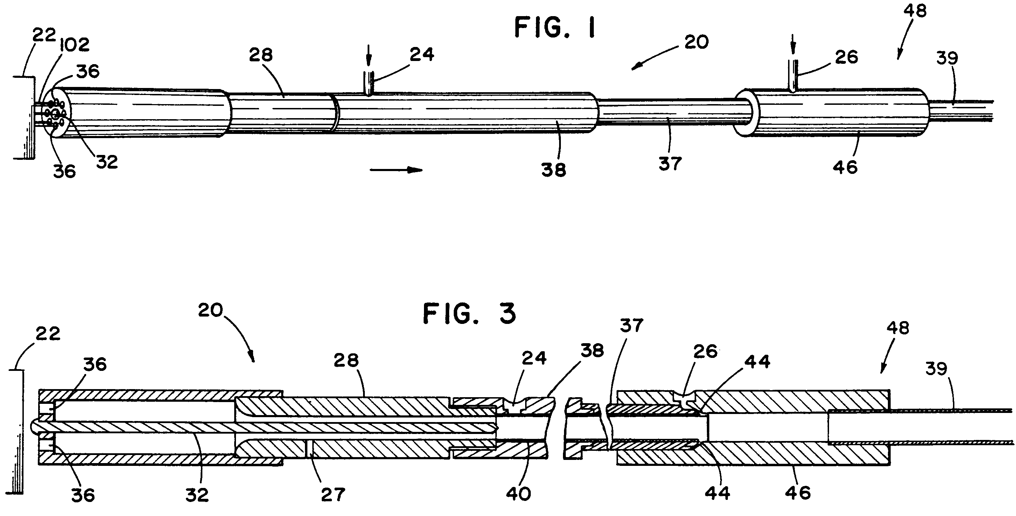

Referring now to the drawings, wherein like reference numerals designate corresponding structure throughout the several views, and referring in particular to Figure 1, there is shown an impregnation and coating apparatus 20 for making composite materials. The impregnation and coating apparatus 20 includes a number of chambers for performing various operations with fibers and resin to achieve a composite material. The fibers move along the apparatus as indicated by the directional arrows in the Figures. In addition to the various chambers, heaters 22 heat fibers prior to entering the impregnation and coating apparatus 20. Resin and coating injectors 24 and 26, respectively, inject resin and coatings at different stages of the pultrusion process. The resin impregnation and coating apparatus 20 is arranged so that fibers flow into a compaction chamber 28, then to a resin impregnation chamber 38, then to a coating chamber 46 located before or at some point along a die 48 which may include a pre-die section 37, as more clearly shown in Figure 3.

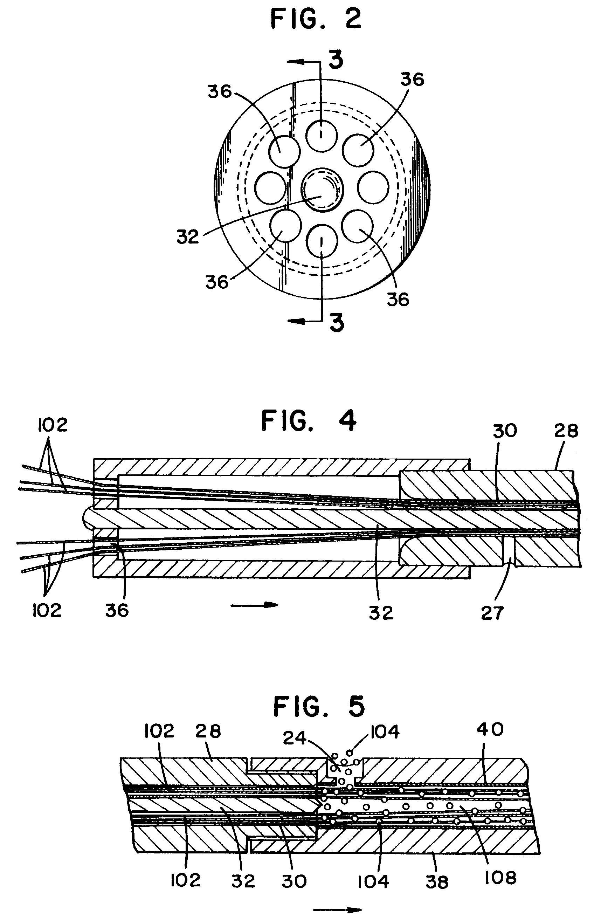

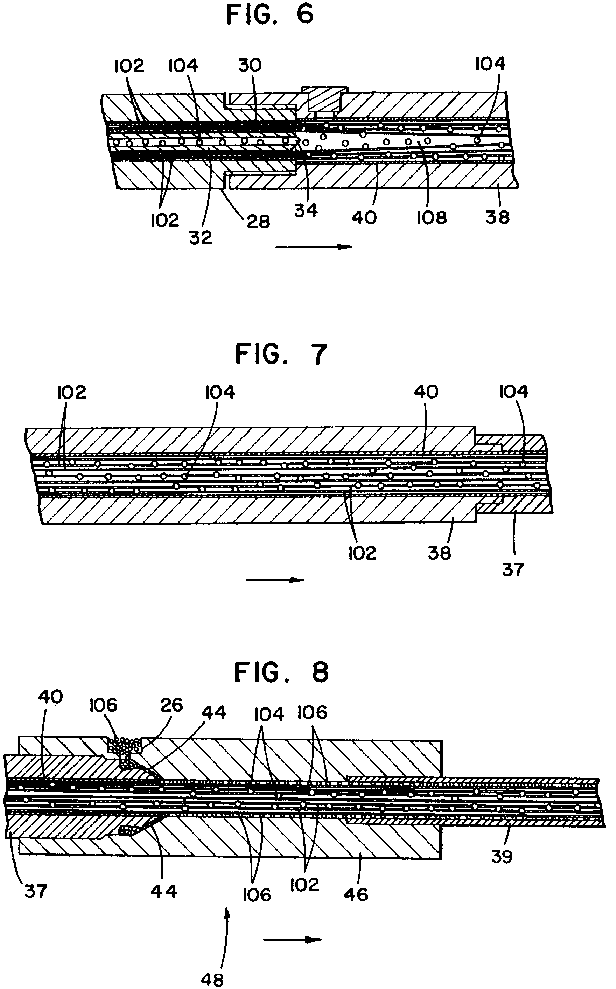

At the compaction chamber 28, fibers enter and pass through orifices 36 spaced around a mandrel 32 as shown in Figures 2 and 3. In addition, a vacuum line 27 may draw off excess gases to enhance impregnation and reduce void content. At the resin impregnation chamber 38, resin injectors 24 are positioned at the entrance end, along with the mandrel 32. In addition, there may be a mandrel resin injector 34 as shown in Figure 6. The impregnation chamber 38 has walls 40 tapering along the length of the chamber. The walls 40 are machined or otherwise formed to constrict the fibers and resin passing through the chamber.

In one embodiment, after passing through the tapered portion of the impregnation chamber 38, the resin and fiber enter the first portion of the die 48 hereinafter referred to as pre-die 37. The pre-die 37 forms the final part shape and maintains the heat of the resin and fiber or applies additional heat. The pre-die 37 can have a slightly smaller or the same cross section than the second part of the die, hereafter referred to as a final or exit die 39. The relative lengths of the pre-die 37 and exit die 39 may vary and wail be determined by process conditions of various resin and coating materials as well as part size and shape. Typical total length of the predie 37 and final die 39 is 75 to 125 cm. The pre-die heating and/or curing can also be achieved with heat, dielectric means, microwaves or other methods.

In a second embodiment, following the impregnation chamber 38, the pultrusion process proceeds in a coating chamber 46 which may be part of the die 48. The coating chamber 46 has coating injectors 26 which apply a coating about the fiber and resin bundle as explained hereinafter. In one embodiment, the tip 44 of the injector 26 is formed so that an even coating is placed about the resin and fiber bundle passing through the chamber, or uniform spacing and pressure may be utilized to achieve a uniform coating thickness. After coating, the pultrusion process proceeds by passing the composite material through the final die 39. The pre-die 37 and final die 39 as shown have a circular configuration, however, other shapes may be selected to create different composite shapes. The pultruded material is pulled through the die by any one of various types of pullers which are used with pultrusion equipment. The composite is then cut to form serpents of composite material which may undergo additional processes to reshape or reform the composite.

## Impregnation and Coating Process

As shown in Figure 1, prior to passing through the impregnation and coating apparatus 20, fibers 102 may be preheated by the heaters 22. The fibers may be any number of materials such as glass fibers, polymeric fibers, carbon fibers, metal fibers, or ceramic fibers. Upon entering the impregnation and coating apparatus 20, the fibers 102 pass through the orifices 36 spaced in an annular configuration which distributes the glass fibers 102 in an evenly-spaced pattern as shown in Figure 2. The orifices 36 distribute the fibers in an annular pattern around the floating mandrel 32 to create a center gap, which is filled simultaneously with resin. By keeping the fibers 102 spaced apart prior to impregnation, each fiber 102 is more quickly and thoroughly heated. It can be appreciated that other techniques may be used to space the fibers 102 during preheating and then compacting the fibers prior to resin impregnation. In addition, instead of fibers, matting or other suitable materials may be use,i as a reinforcing material and impregnated with resin. Fiber spacing and preheating lead to more complete resin impregnation and faster processing. As shown in Figure 4, as the fibers 102 pass through the compaction chamber 28, the fibers become more tightly packed until reaching I:he exit. The mandrel 32 extends through the center of the chamber 28 to maintain the fibers in the annular pattern.

Upon passing through the compacting chamber 28, the fibers 102 pass into the resin impregnation chamber 38. As the fibers 102 pass through the compaction chamber 28, the fibers are tightly packed and moving, thereby forming a seal 30 (a fiber seal) so that the impregnation chamber 38 may be pressurized. It can also be appreciated that the fibers 102 may be tightly packed wit-.bout the mandrel 32, so that the fiber seal 30 is formed between the walls of the compaction chamber 28 and the fibers 102.

As shown in Figures 5-7, the fibers 102 are impregnated with the resin material 104 which may be delivered in different ways upon entering the impregnation chamber 38. Although the fibers 102 are tightly packed and form the fiber seal 30 upon entering the impregnation chamber 38, the chamber is enlarged at the injectors 24 to provide room for the resin 104 to contact the fibers 102. The amount of resin 104 must be controlled as too little resin results in resin starved parts, while too much resin results in excessive back flow and leads to weeping of resin from the fiber entrance. As shown in Figure 5, the resin 104 may be injected throughout the fibers 102 from the injectors 24 at the sides of the chamber 38. The injectors 24 may be spaced about the periphery of the chamber 38 or a single injector may, be utilized. The resin 104 impregnates the fibers 102 to form a fiber resin bundle which proceeds down the tapered portion of the impregnation chamber 38. Since in a preferred embodiment the fibers 102 are preheated, thorough impregnation occurs very rapidly to increase production rates. Since the resin 104 is being injected, it may also be preheated just prior to injection and may be agitated to prevent separation of resin components. Injection provides for using resins which are unsuitable for open baths due to either reaction with air or due to fast reaction times after mixing the components of the resin-forming system.

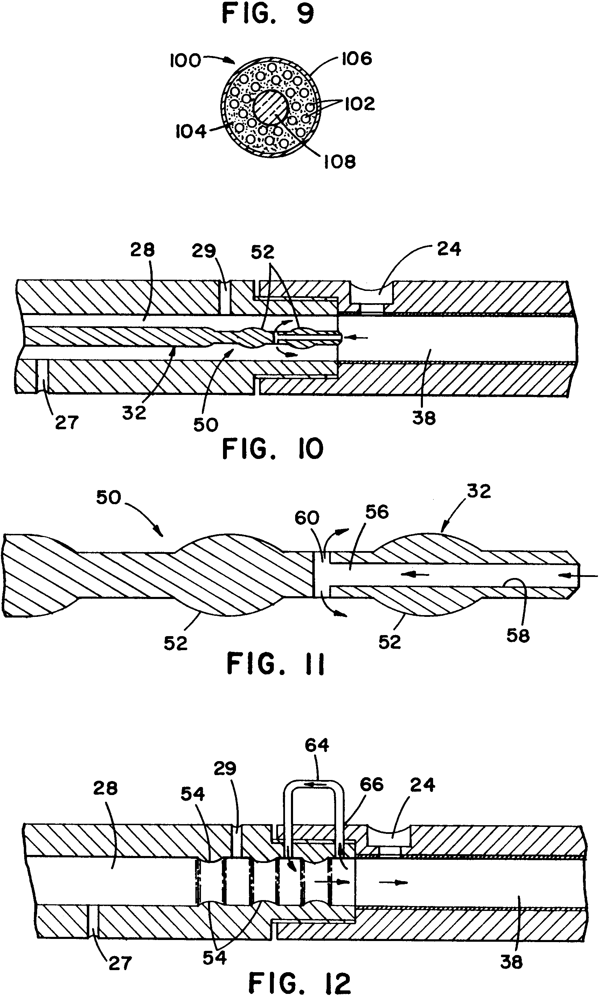

As shown in Figure 6, resin may also be injected through the center of the mass of fibers 102 through the injector 34 at the tip of the mandrel 32. In this manner, the resin 104 is injected into the- (::enter of the fibers and flows in a generally radial direction to impregnate the fibers 102. Injection of resin 104 from the mandrel injector 34 may result in resin core 108 being formed in the composite 100. As shown in Figure 9, the fibers 102 are placed in an annular configuration so that the reinforcing strength is greater than the same composite having the fibers 102 spread throughout the core portion, assuming the same volume fraction of: fibers in both cases. The composite 100 may then have a coating 106 applied.

This configuration provides; a number of advantages including possible cost savings in composites as the resin is typically less expensive than the! fibers 102 so that a resin-filled core is less expensive than a composite 100 having fibers spread throughout.

In addition to injecting from the periphery of the impregnation chamber 38 or from the mandrel 32, the fibers 102 may also be impregnated by the resin 104 by delivering from a combination of the mandrel injector 34 and injectors 24 spaced about the periphery. This achieves a greater impregnation as resin is being delivered both from the exterior and interior of the fibers; 102.

As shown in Figure 7, the walls 40 of the resin impregnation chamber 38 taper slightly along a portion of the chamber. The tapering walls 40 ensure that the fiber and resin bundle forms a pressure head as the resin 104 and fibers 102 proceed along the decreasing cross sectional area of the chamber. As the walls 40 taper, the pressure buildup forces improved impregnation of the fibers. The cross section of the fibers and resin 102 and 104 also is decreased. The reduction causes pressure which consolidates the fibers and results in substantially void free parts. The tapering walls all(:)w for preforming of the fibers and resin 102,104 prior to passing through the predie 37 so that control over the shaping and distribution of the resin and fibers 102,104 is achieved even prior to passing through the pre-die 37 and final die 39.

In the impregnation chamber 38, the resin 104 is applied to the fibers 102 which have previously been heated. This heats the resin 104 an.d causes an exothermic reaction to take place as the resin passes through an elevated temperature point after passing through the tapered portion. The exothermic reaction cures the resin 104 so that a composite is achieved upon leaving the die 48.

The greater pressure achieves a better wet-out, that is better covering of the fibers 102, so that greater speeds may be achieved without sacrificing quality. With the pressurized impregnation, not only is greater impregnation achieved, but it is also done much faster. Therefore, running speeds over 165 cm. per minute in a 125 cm long die using unsaturated polyester resins can be achieved with this process which are two to three times the typical speed of a standard pultrusion process. Even higher running speeds can be achieved with fast reaction RIM resins with this process, whereas an open bath pultrusion process cannot utilize a multicomponent resin mixture that reacts rapidly after mixing the individual components of the resin mixture. Resins with fast reaction times include, but are not limited to, systems which form polyolefins, polyesters, polycaprolactones, polyamides, polyurethanes, and polyureas. The greater wet-out and impregnation is achieved in large part due to the pressure head and heated fibers and the capillary action created thereby.

The degree of taper is critical to achieving proper pressures and achieving the correct synergy between the walls 40 and the resin 104. The taper is very gradual and does not start until a few centimeters past the point of the resin injection. The taper must be such that the pressure allows for some slight flow-back of resin along the walls 40 in the impregnation chamber 38 while maintaining pressures from zero to $70 \times 10^6$ dynes/CM$^2$ gage which forces resin 104 along the chamber. With a widened entrance to the impregnation chamber 38, the resin has space in which to flow back and also achieves excellent wet-out. The pressure forces the resin along the chamber and minimizes the resin sticking to the walls 40 so that greater processing speed can be achieved. A resin rich surface is maintained even though the area of the chamber 38 is decreasing as the resistance to backward flow of the resin 104 is less at the walls 40 than through the fiber-resin bundle.

As shown in Figures 10 and 11, there is shown an alternative embodiment of a mandrel 50 having a plurality of lobes 52 spaced therealong extending outward into the compaction chamber 28 rather than heaving an injector. The lobes 52 aid in massaging any backflow of resin into the fibers. As shown in Figure 12, lobes 54 may also be placed on the walls of the compaction chamber to provide for massaging backflow of resin into the fibers. In addition, excess resin which is flowing against the direction of fiber travel may be withdrawn through ports 29. The ports 29 are positioned between the vacuum line 27 and the resin injectors 24.

As shown in Figure 11, the mandrel 50 may be configured to form an internal resin recirculation loop 56. The internal circulation loop 56 has a passage 58 leading back from the tip of the mandrel 50 to radial passages 60 leading out between the lobes 52. The pressure ahead of the end of the mandrel 50 is higher than the pressure at the wider portions between the lobes 52. This draws resin into the passage 58 and out through passages 60. The fibers then draw the resin along as indicated by the directional arrow as shown in Figure 11, forming a continuous resin loop.

As shown in Figure 12, an external recirculation loop 64 may also be utilized. With the external loop 64, a passage 66 leads back from a higher resin pressure between the lobes 54 at the walls of the compaction chamber 28. Resin flows back through the passage 66 and is carried along with the fibers.

As shown in Figure 8, the resin and fiber bundle 102, 104 may have a coating 106 applied thereto. The tip 44 of the coating injector 26 coats the exterior of the bundle. With the synergy between the walls of the impregnating chamber 38 and the exterior resin, the surface to be coated has resin surrounding the fibers 102 prior to entering the coating chamber 46. The size of the final die 39 after the point of applying a coating may be enlarged, so that there is space around the fiber resin bundle for an adequate coating 106 to be applied to the fiber and resin bundle. The coating 106 may be as thin as several thousandths of a millimeter or up to one half centimeter thick and higher as compared to prior techniques which have a narrow range of coating thickness. This provides greater covering of the fibers so that the overall quality of the composite structure 100 is improved, as there are decreased effects from degradation and less chance of wear occurring to the fibers 102. The coating layer 106 adheres to the fibers and resin 102, 104 which are leaving the impregnation chamber 38 and pre-die 37 under pressure from the tapering walls 40.

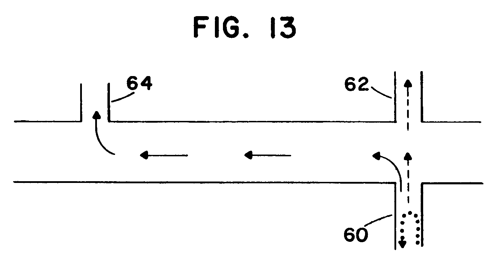

Since the apparatus may need to be shut down from time to time, it is necessary to clear the chambers to remove the resin so that it does not cure inside the chambers, thereby making removal extremely difficult. To facilitate removal of the resin or coating from the various chambers, flushing arrangements may be used, as shown in Figure 13. With a flushing arrangement, an inlet for flushing solvent is positioned so that a resin or coating can be cleared from the injectors and chambers so that the resin or coating remaining in the chambers may be cleared. In a first embodiment, an inlet 60 is placed opposite an injector and the flushing substance enters and leaves through the inlet which also functions as an outlet as indicated by the dotted arrow. In the second embodiment, an outlet 62 is placed opposite the inlet, either of the inlet or outlet may be an injector, so that the flushing occurs not only through the chamber but through the injector as well. In a third embodiment, the flushing substance is introduced at the inlet 60 and flows back against the general direction of the resin and fibers, clearing the chamber and leaving through an outlet 64. Again, the outlet may be a resin or coating injector so that the chambers as well as the injectors may be flushed. It can be appreciated that the flushing arrangement can incorporate combinations of inlets and outlets wherein the outlets are the same as the inlets,, opposite the inlets or upstream from the inlets so that the entire apparatus may be thoroughly cleaned.

It can be appreciated that by having both resin injectors 24 and coating injectors 26, the amount of resin 104 and coating 106 can be precisely controlled. Mixing of multicomponent reactive resin-forming systems and metering of the coating 106 and resin 104 are used to control the amount of resin and the coating thickness. This control provides for forming seals between the resin fiber bundle and the walls of the various chambers. The seals formed allow for pressure heads to be applied so that the resin and coating do not adhere to any surfaces.

The techniques of the present invention which provide for an inner core also provide for varying the cross-section of the composite 100. As shown in Figure 9, the distribution of the fibers 102 and the resin 104, along with the thickness of the coating 106, and the size of the resin core 108 provides for varying composites 100. The present invention also provides for forming shapes other than round, as triangles, rectangles, I-beams, J's, U's, L's, and other shapes may be achieved with different dies. With such differences in composition, qualities can be assigned to the composites so that different core and coating configurations may be specified. The prior bathtype pultrusion processes does not control the distribution of the fibers, the resin core and coating across the cross section of composites. In addition, it was difficult to coat at any time, and coating could not be applied until after the composite leaves the die. Therefore, in addition to varying fiber distribution and spacing in resin core size, the composites can also be varied according to the thickness or nature of the coating 106. Using a compatible coating 106, the present invention also provides for secondary coating or electroplating of the composites after passing through the die as may be done with the prior art techniques.

EXAMPLE

The conditions which affect the impregnation and rates are dictated by the following parameters:

$A_1$ = cross-sectional area of the impregnation chamber at its inlet

$A_f$ = cross-sectional area of the impregnation chamber at the exit of the taper

L = length of the taper

N = average viscosity of resin in the taper

K = average permeability of the fibers in the taper

V = pultrusion speed

wherein the pressure P at the exit of the gradual taper is given by the following equation:

$$P = (A_i - A_f) / (A_i + A_f) \cdot (N/K) L V$$

With the use of an apparatus as shown in Figures 1-8, a first solid composite 100 was produced from a plurality of 16 micron diameter unidirectional glass fibers and unsaturated polyester resins and a second composite was produced with 16 micron diameter unidirectional glass fibers and nylon 6 forming resins under the following conditions:

$A_f$ = .6787 $CM^2$

$A_i$ = 1.0956 $CM^2$

N = 3 poise

K = 2.9 X $10^{-6}$ $CM^2$

V = 2.794 cm/sec (66 in/min)

L = 12.07 cm, so that the pressure = 8.1251 x $1^6$ Dynes/$CM^2$ (117.8 psi)

It can be seen that the pressure is substantial, which provides for improved impregnation and prevents adhesion of the resin and/or coating to chamber and die walls. The conditions of the example also provide for production rates two to three times faster than prior art processes. At the impregnating area, the percentage of glass by volume is about 38% while the percentage raises to 58% after passing through the taper thereby removing voids.

It is to be understood, however, that even though numerous characteristics and advantages of the present invention have been set forth in the foregoing description, together with details of the structure and function of the, invention, the disclosure is illustrative only, and changes may be made in detail, especially in matters of shape, size and arrangement of parts within the principles of the invention to the full extent indicated by the broad general meaning of-the terms in which the appended claims are expressed.

**Claims**

1. A method of forming a composite material impregnating fibers with a resin, comprising the steps of:

   (a) compacting the fibers;

   (b) injecting a resin-forming system throughout the fibers to form a fiber resin bundle; and,

   (c) conveying the resin and fibers into a passage having a reduced cross section, thereby applying pressure to the fiber resin bundle.

2. A method according to claim 1, further comprising the step of preheating the fibers prior to compacting.

3. A method according to claim 1, wherein the resin is injected from a mandrel in the center of the fibers.

4. A method according to claim 1, wherein the fibers pass through a plurality of orifices surrounding the mandrel.

5. A method according to claim 3, wherein the injected resin forms a resin core surrounded by an annular fiber-resin bundle.

6. A method according to claim 1, wherein the fiber resin bundles pass through a tapered passage to form a pressure head.

7. A method according to claim 1, wherein the resin is injected under a pressures ranging from zero to 70 x $10^6$ dynes/$cm^2$ gage.

8. A method according to claim 1, wherein the resin-forming system comprises a thermoplastic or thermoset resin.

9. A method according to claim 1, further comprising the step of applying a coating to the fiber resin bundle.

10. An apparatus for forming composite materials from fibers and resins passing through the apparatus, comprising:

    (a) fiber compacting means for compacting the fibers to form a seal;

    (b) resin applying means for impregnating the fibers with resin, thereby forming a fiber and resin bundle;

    (c) coating means for applying an outer coating to the fiber and resin mass; and,

    (d) die means for shaping the coated fiber resin mass.

11. An apparatus according to claim 10, wherein the fiber compacting means comprises a plurality of orifices spaced in an annular pattern.

12. An apparatus according to claim 10, further comprising means for controlling the delivery of resin and the delivery of coating material.

13. An apparatus according to claim 10, wherein the compacting means further comprises a mandrel extending through the fibers.

14. An apparatus according to claim 13, further comprising means for introducing resin through the mandrel.

15. An apparatus according to claim 10, wherein the mandrel has a plurality of lobes spaced therealong for enhancing resin impregnation.

16. An apparatus according to claim 10, wherein the fiber compacting means comprises a compacting chamber, the chamber having lobes placed along walls thereof, the lobes extending into the chamber.

17. An apparatus according to claim 10, wherein the fiber compacting means further comprises vacuum means for removing gases from the compacting means.

18. An apparatus according to claim 10, further comprising resin recirculation means for recirculating resin through the fibers.

19. An impregnation apparatus for impregnating fibers with a resin to form a fiber resin bundle, comprising:

(a) an impregnation chamber having a tapering portion, tapering down to an exit for the fiber resin bundle;
(b) resin injector means for injecting the resin forming materials into the impregnation chamber; and,
(c) seal means for preventing resin from flowing backward out of the impregnation chamber.

20. An impregnation apparatus according to claim 19, further comprising coating means having coating applicators located between the resin injector means of the impregnation chamber and exit of die.

21. An impregnation apparatus according to claim 19, further comprising an expanded area proximate the resin injection means in the impregnation chamber.

22. An impregnation apparatus according to claim 19, further comprising heating means for preheating the fibers prior to impregnating.

23. An impregnation apparatus according to claim 19,, further comprising flushing means for flushing resin from the impregnation chamber.

24. A method of impregnating fibers with a resin and applying a coating to the resin and fibers, comprising the steps of:

(a) forming a fiber seal -at a first end of an impregnating chamber;
(b) injecting resin into the fibers after the fiber seal;
(c) applying a coating to the fibers and resin; and,
(d) forming a seal following coating of the fibers and resin at a die to prevent the coating from flowing out of a die exit.

25. A method according to claim 24, further comprising the step of forming a second seal at an exit end of the impregnation chamber.

26. A method according to claim 25, wherein the second seal is formed by the fibers and resin engaging a reduced cross section of the chamber.

27. A method according to claim 24, wherein a plurality of fiber seals are formed at the first end of the impregnation chamber.

28. A method according to claim 24, wherein the coating comprises a thermoplastic or thermoset resin.

29. A method according to claim 24, wherein the coating is applied to a fiber resin bundle as the resin within the fiber bundle is cured or partially cured.

30. A fiber resin-forming system composite material formed by the steps of:

(a) injecting a resin-forming system to form a resin core;
(b) surrounding the resin core with fibers; and,
(c) impregnating the fibers with a resin-forming system.

31. A composite material according to claim 30, further comprising a coating applied around the fibers and resin.

32. A method for impregnating fibers with a resin forming system comprising the steps of:

(a) compacting the fibers to form a fiber seal at an entrance to an impregnation chamber;
(b) impregnating the fibers in the impregnation chamber to form a fiber resin bundle and conveying the fiber resin bundle to a coating chamber; and,
(c) coating the fiber resin bundle.

33. A method according to claim 32, further comprising the step of forming a fiber seal between compacting and impregnation.

**34.** A method according to claim 32, further comprising the step of forming a seal between the impregnating and coating chamber.

**35.** A method according to claim 34, wherein the seal between the impregnating and coating chambers is formed by the fiber resin bundle engaging a tapering portion of the impregnation chamber.

FIG. I

FIG. 3

EP 0 542 709 A1

## FIG. 2

## FIG. 4

## FIG. 5

# FIG. 6

# FIG. 7

# FIG. 8

# FIG. 9

# FIG. 10

# FIG. 11

# FIG. 12

# FIG. 13

**European Patent Office**

# EUROPEAN SEARCH REPORT

Application Number

EP    92 87 0187

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 269 197 (INDUSTRIAL TECHNOLOGY RESEARCH INSTITUTE) | 1-8,30 | B29C67/14 |
| Y | | 10-14, 32,33 | |
| | * column 3, line 21 - line 54; figures 2,3 * | | |
| | * column 7, line 40 - line 48 * | | |
| | --- | | |
| X | FR-A-2 271 912 (CONTRAVES) | 19,21 | |
| Y | | 32,33 | |
| | * figure 1 * | | |
| | --- | | |
| D,Y | US-A-4 394 338 (FUWA) | 10-14, 32,33 | |
| D,A | | 9,20,21, 28,29,31 | |
| | * column 3, line 32 - line 36; figure 2 * | | |
| | --- | | |
| X | EP-A-0 364 829 (BAYER) | 1,2,7,8 | |
| A | | 6,10,18, 22, 24-28, 32,33 | TECHNICAL FIELDS SEARCHED (Int. Cl.5 ) |
| | * page 4, line 47 - line 53 * | | B29C |
| | * page 5, line 56 - line 56 * | | |
| | --- | | |
| A | EP-A-0 364 828 (BAYER) * claims; figures * | 15,16 | |
| | --- | | |
| A | EP-A-0 030 264 (MESSERSCHMITT-BÖLKOW-BLOHM) * page 4, line 1 - line 6 * | 17 | |
| | ----- | | |

The present search report has been drawn up for all claims

| Place of search | Date of completion of the search | Examiner |
|---|---|---|
| THE HAGUE | 18 JANUARY 1993 | VAN WALLENE A.M. |